# EUROPEAN PATENT APPLICATION

(11) **EP 1 475 760 A1**
(43) Date of publication of application: **10.11.2004**
(21) Application number: 03291086.1
(22) Date of filing: 06.05.2003
(51) Int. Cl.: G07F 19/00, G07F 7/08

(54) **Method for executing transactions**

(71) Applicant: ALCATEL, 75008 Paris (FR)
(72) Inventor: Wieslawa, Wajda, 75210 Keltern (DE)
(74) Representative: LOUIS- PÖHLAU- LOHRENTZ

(57) **Abstract**

The invention concerns a method for executing a transaction by means of a credit card (1), as well as a credit card (1), a host system (3) and a transactor terminal (2) for executing such transactions. A location dependent credit line profile (12) of the credit card (1) is stored. The location dependent credit line profile defines the credit line of the credit card dependent on location of transaction. Further, location data of the transaction executed by means of the credit card are determined. The transaction is checked in view of granted local credit line calculated by means of determined location data and the credit line profile (12) of the credit card (1).

## Description

The invention relates to a method for executing a transaction by means of a credit card, a credit card for executing transactions, a host system for executing transactions by means of credit cards and a transactor terminal for executing a transaction by means of credit cards.

Various kinds of credit cards with embedded processor or embedded memory are employed for the payment of services. Credit card organizations are currently testing solutions that are to be internationally employed, for example "Visa-Cash" of Visa, "Mondex" of Mastercard, "Clip" of Europay and "Proton" of American Express. Further, this group of vendors has specified a common standard, which is currently known by the working title "EMV".

Further, WO 02/21433 A3 describes a smart electronic authorization and credit card. This credit card includes a keypad for entering data, a magnetic strip or a Smart Card Chip which stores confidential information, a battery, a memory that stores program code and data, a CPU and a Smart Key Card hybrid chip. This credit card can be carried in the same manner one carries a conventional credit card. It has all basic physical characteristics of a credit card and can be handled as a typical credit card. The credit card is either in an active state or in an inactive state. The owner activates the credit card by entering his secret code via the keys on the card. The secret code may be a numeric code you receive from a financial institution, or any other institution that uses a numeric code for your specific card. The entry of the code via the keyboard on the card activates the card. Once active, the card can be issued as a regular credit card for banking. After a preprogram specific period of time, the credit card deactivates itself and turns into an inactive sleep mode and cannot be used for active transactions anymore. Thereby, it prevents the fraudulent use of the credit card.

It is an object of the present invention to limit the fraudulent use of a credit card.

This object is achieved by a method for executing a transaction by means of a credit card, the method comprises the steps of storing a location dependent credit line profile of said credit card, the location dependent credit line profile defines the credit line of the credit card dependent on location of transaction; determining location data of the transaction executed by means of the credit card; and checking the transaction in view of granted local credit line calculated by means of the determined location data and the credit line profile of said credit card.

The object of the invention is further achieved by a credit card for executing transactions, the credit card comprises a memory unit storing a location dependent credit line profile of the credit card, the location dependent credit line profile defines a credit line of the credit cards dependent on location of transaction. The object of the invention is further achieved by a host system for executing transactions by means of credit cards, the host system comprises a memory unit storing at least one location dependent credit line profile of a credit card, the location dependent credit line profile defines the credit line of the credit card dependent on location of transaction; and a control unit for granting a local credit line to a transaction, wherein the control unit calculates said local credit line by means of location data determined for the transaction and by means of the credit line profile assigned to the involved credit card. The object of the invention is further achieved by a transactor terminal for executing transactions by means of credit cards, the transactor terminal comprises a control unit for checking a transaction executed by means of a credit card in view of granted local credit line, wherein the granted local credit line is calculated by means of determined location data and by means of a location dependent credit line profile assigned to the involved credit card, the location dependent credit line profile defines the credit line of the credit card dependent on location of transaction.

Several advantages are achieved by the invention. Fraudulent use of the credit card is made more difficult and the risks connected with fraudulent use are drastically reduced. It becomes possible that higher amounts of money may be paid out by one or several cash dispensers located in the neighborhood of the users place of residence. At abroad, where the probability of theft is substantially increased, the credit line is strictly limited to a small amount of money which is sufficient for holiday. Further, it is possible that the credit line profile comprises a list of selected banks or cash dispensers which limits the number of banks and cash dispensers usable in foreign countries. Thereby, the use of the credit card is additionally made more difficult for the fraudulent user.

The present invention enables a user of a credit card to adapt the granted credit line to its user behavior and thereby drastically reducing the risk of big losses due to theft or fraudulent use of the credit card. Further, it increases the flexibility and user friendness of the transaction system.

Further advantages are achieved by the embodiments indicated by the dependent claims.

According to a preferred embodiment of the invention, the credit line profile assigns credit lines to location areas specified by geographical coordinates. Further, additional location data may be linked with geographical coordinates to describe a specific location area. For example, the geographical coordinates specify a location in the center of a location area and linked location data specify a radius defining the surrounding of the location which should be considered as specified location area. In addition, the credit line profile may assign credit lines to locations specified by identifiers of local transactors. Consequently, the credit line profile may contain a list of identifiers, each identifier specifying a specific cash-dispenser, bank or shop.

By help of the above described data types and data structure, the credit line profile may define location dependent credit lines in a flexible and easy to handle way. Further, processing time, communication efforts and implementation time is saved by such kind of implementation of a location dependent credit line profile.

Further advantages are achieved by enlarging the dependency of the location dependent credit line profile in the following ways: According to a first possibility, the credit line profile further defines the credit line of the credit card dependent on time of transaction. According to a second possibility, the credit line profile defines the credit line of the credit dependent on kind of business a transaction is executed for. These additional dependencies increase the flexibility and user friendness of the credit line granting system, because the credit line profile may be better adapted to the users behavior. Further, this additional dependencies increase the security of the transaction concept and decrease the risks connected with a miss-user or a fraudulent use of the credit card.

According to a preferred embodiment of the invention, the location dependent credit line profile is stored on the credit card. This makes it possible to perform calculations for granting a local credit line at the credit card or at the local transactor terminal without having to transmit sensitive data over communication networks. Thereby, processing power and communication bandwidth are saved.

The credit line profile may be stored on a magnetic strip of the credit card. In that case, the security of the whole system may be increased by storing the credit line profile in an encoded way.

Further, the credit card may be equipped with a location determining unit, for example a GPS-receiver, which determines location data of transactions executed by means of the credit card. Further, it is possible that the credit card comprises a control unit for determining local credit lines by means of the credit line profile and by means of location data of transactions. The security of the whole system is increased by such kind of credit cards.

According to a further preferred embodiment of the invention, a host system comprises a memory unit storing at least one location dependent credit line profile of a credit card. The host system grants a local credit line to a transaction, wherein it calculates the local credit line by means of location data determined for said transaction and by means of the credit line profile stored in the host system and assigned to the involved credit card. Consequently, the credit line data has not to be exchanged over communication networks, which increases the security of the whole system and reduces bandwidth needs.

Further advantages are achieved if the host system comprises means for determining the location of transactions. For example, the whole system may access a location service of a GSM network. Due to the fact that the location of the transaction is determined independent of the transaction process, safety and security of the whole system is increased.

These as well as other features and advantages of the invention will be better appreciated by reading the following detailed description of presently preferred exemplary embodiments taken in conjunction with accompanying drawings of which:
- Fig. 1: is a block diagram which shows a transaction system comprising a credit card and a transactor terminal according to the present invention.
- Fig. 2: is a block diagram which shows a second embodiment of a transaction system comprising a host system according to the present invention.
- Fig. 3: is a block diagram which shows a third embodiment of a transaction system comprising a credit card and a transactor terminal according to the present invention.
- Fig. 4: is a block diagram showing a fourth embodiment of a transaction system comprising a credit card according to the present invention.

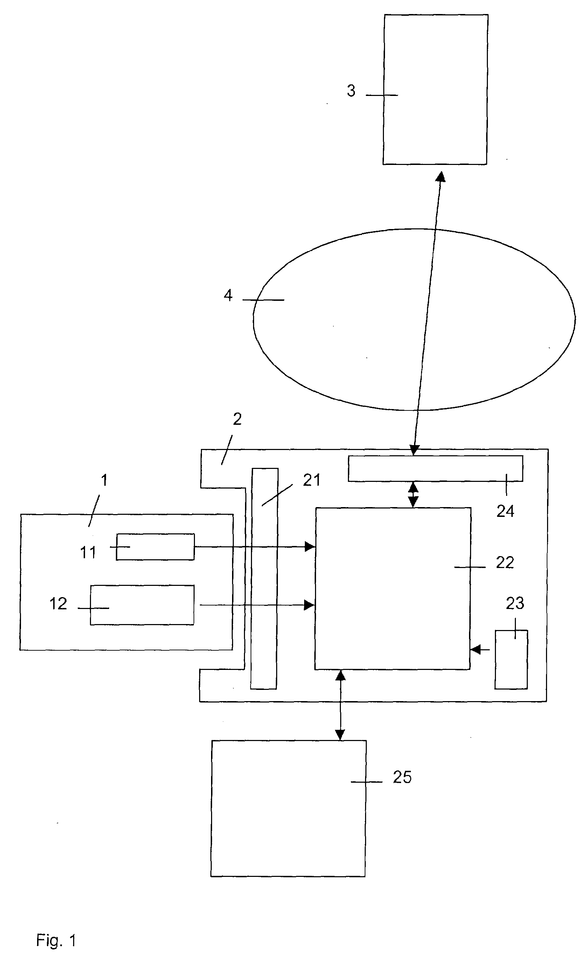

Fig. 1 shows a transaction system with a credit card 1, a transactor terminal 2, a host system 3 and a communication network 4.

The credit card 1 is a card adapted to support the execution of any transaction wherein value is attached to a transaction. For example, the credit card 1 is a plastic card comprising a magnetic strip for the rewrite of electronic information or a chip card or smart card comprising an embedded memory chip and/or an embedded processor. The credit card 1 may be employed for different kind of payments, for example referred to as credit card, debit card or bank card.

The credit card 1 comprises a memory unit for storing card identification data 11 and a credit line profile 12. The memory unit may be formed by one or several magnetic strips storing these data. Further, the memory unit may be an electronic memory chip or an embedded memory of a CPU. Further, it is possible that the memory unit stores these data in an optical way, for example, as barcodes printed on a plastic card or as interference pattern.

The card identification data comprises data to identify the credit card or the holder of the credit card. For example, it comprises a credit card number, name and address of the holder of the credit card and an account number associated with the credit card. Further, it may comprise authorization data, for example a public key used for an encryption or authorization procedure. At least, the card identification data 11 comprises a single number identifying the credit card 1 in a unique way.

The credit line profile 12 is a location dependent credit line profile defining the credit line of the credit card 1 dependent on location of transaction. For example, the credit line profile 12 is formed by a list of data pairs, each data pair links a specific credit line with a specific location or location area. But, it is also possible that the credit line profile is defined by a more complex data structure. For example, location or location areas are linked to one or several location groups. Each location group is linked to a specific credit line. Further, additionally dependencies may be implemented within the credit line profile 12. For example, the credit line profile 12 further defines the credit line of the credit card dependent on the time of transaction and/or dependent on kind of business the transaction is executed for. A location group may be linked to one or several parameters defining the credit line profile dependent on time and/or dependent on kind of business of transaction.

A location can be specified by its geographical coordinates. Further, a location can be specified by the identifier of a local transactor. A location area can be specified by the geographical coordinates of a location and a set of data describing the shape of the location area relative to this location. For example, a location area is specified by the coordinates of the central point of said area according to a geographic system, for example WG 81, and by a radius describing the size of the surrounding area of the location assigned to the location are. Further, a location area can be specified by the geographical coordinates of two or more locations defining a boarder line of the location area.

For example, the credit line profile 12 comprises one or several sets of location data, each said location data describes a location or a location area. A set of data comprises an identifier of a local transactor, one or several geographical coordinates and/or one or several data describing the shape of a location area. Further, each set of data comprises a pointer linking the respective set of data with a specific local credit line. The local credit line is specified by a predefined amount of money.

The transactor terminal 2 is formed by a cash dispenser or a credit card terminal located in a shop. The transactor terminal 2 comprises an interface to connect credit cards like the credit card 1 to the terminal. Further, it is composed of a hardware platform comprising a microprocessor and one or several application programs executed by this hardware platform. This combination of hardware and software components are providing the functions described in the following:

From the functional point of view, the transactor terminal comprises a card reader 21, a communication unit 24, a control unit 22 and a localization unit 23. Further, the transactor terminal 2 is connected with an input/output device 25.

The card reader 21 is employed for reading the card identification data 11 and the credit line profile 12 stored in the memory unit of the credit card 1. For example, the card reader 21 comprises an electric reading head for reading data stored in the magnetic strips arranged on the credit card 1.

The input/output device 25 comprises a keypad for entering a personal identification code. Further, the input/output device can be equipped with a display unit, for example a LCD-display (LCD = Liquid Crystal Display) for providing a graphical user interface between the credit card holder and the transactor terminal.

The communication unit 24 provides all necessary functionalities for establishing a secure connection between the transactor terminal 2 and the host system 2 via the communication network 4. Beside functionalities handling the protocol stack applied for the communication between the transactor terminal 2 and the host system 3, the communication unit 24 does also contain a security module providing safety and security of this communication. For example, this security module executes an authorization procedure between the host system 3 and the transactor terminal 2 and applies an encryption scheme on data exchanged between the transactor terminal 2 and the host system 3. Preferably, an encryption and authorization is performed by means of asynchron keys.

The localization unit 23 may be formed by a GPS-receiver (GPS = Global Positioning System) determining the position of the transactor terminal 2 by means of radio frequency signals received from several satellites. Further, the localization unit 23 can be formed by a memory unit storing the geographical coordinates of the present location of the transactor terminal 2. Further, it is possible to implement the transactor terminal 2 without the localization unit 23.

The control unit 22 controls the terminal side part of the transaction process.

It induces the card reader 21 to read the card identification data 11 and the credit line profile 12 stored on the credit card 1. Further, it controls the input/output device to display a demand to the card holder to enter the pin number via the keypad of the input/output device 25.

In the following, the control unit 22 receives the card identification data 11, the credit line profile 12 and a pin code from the card reader 21 and the input/output device 25, respectively.

According to a preferred embodiment of the invention, the credit line profile 12 is stored on the credit card 1 in an encrypted way. In that case, the control unit 22 comprising a security module to decode the encrypted credit line profile 12.

Further, the control unit 22 receives via the input/output device 25 payment data indicating details of the payments assigned to the transaction. For example, the payment data specify a value or an amount of money attached to the transaction.

In the following, the control unit 22 interacts through the communication unit 24 with the host system 3. The host system 3 checks whether it agrees with the transaction or rejects the transaction. Before enabling this check, the control unit 22 transmits, beside the above described data, the pin code and the payment data to the host system 3.

But, it is also possible that the pin code is not sent to the host system 3. It is possible, that the authorization of the credit card user is already checked by an authorization procedure executed by the control unit 22, which takes card identification data and the pin code as input value. Further, it is possible that a random number generated by the host system 3 and transmitted through the communication unit 24 to the control unit 22 is encrypted by help of the pin code. The result of the encryption is replied through the communication unit 24 to the host system 3. The host system 3 evaluates, by decoding of the encrypted data, whether it accepts the authorization of the card user.

Further, the control unit 22 calculates by means of determined location data and by means of the credit line profile 12 the local credit line assigned to the transaction. Then, the control unit 22 checks the transaction in view of this granted local credit line. For example, it calculates the local credit line by help of the data received from the localization unit 23 and the credit line profile 12 received from the credit card 1. Then, it compares the payment data received from the input/output device 25 with the calculated local credit line. If the value of the transaction exceeds the determined local credit line, it stops the further processing of said transaction. Further, it is possible that the tranactor terminal 2 first requests an acknowledgement of the transaction by the host system 3 and later on performs the above described checking routine, if the host system 3 agrees with the transaction.

The communication network 4 is preferably an open network as represented by the Internet and the IP protocol family. But, it is also possible that the communication network 4 is a classical telephone network or an wireless communication network, for example a GSM or UMTS network (GSM = Global System for Mobile Communication; UMTS = Universal Mobile Telecommunication System).

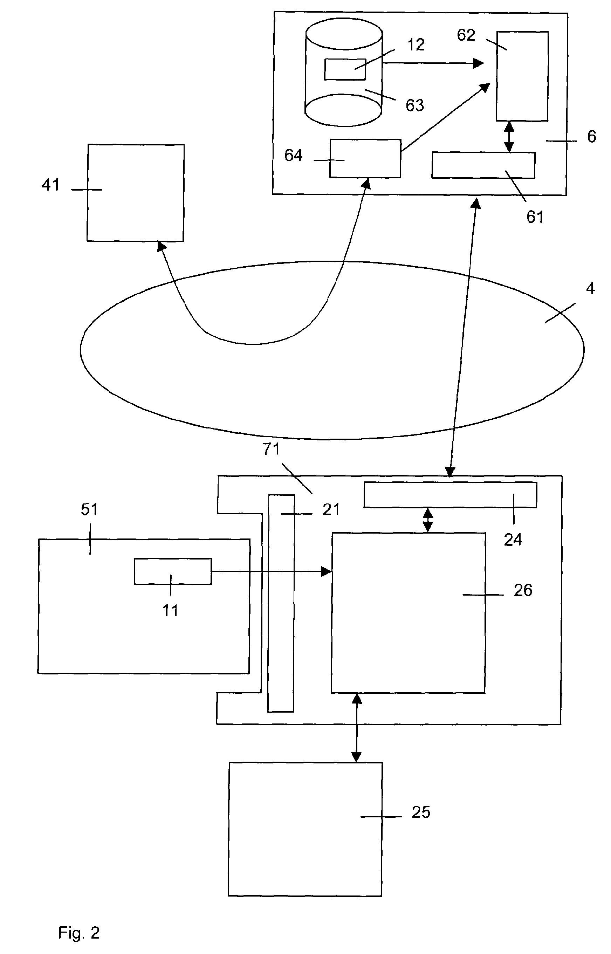

In the following, further embodiments of the invention are described by hand of Fig. 2.

Fig. 2 shows a credit card 51, a transactor terminal 71, the communication network 4, a host system 6 and a localization server 41.

The credit card 51 is equipped as the credit card 1 according to Fig. 1, with the difference that it is only necessary to store the card identification data 11 within the memory unit of the credit card 51. But, it is also possible that further data are stored in addition to the card identification data 11 on the credit card 51. The transactor terminal 71 comprises the communication unit 24, the card reader 21 and a control unit 26 connected with the input/output device 25. The card reader 21, the communication unit 24 and the input/output device 25 are arranged as the corresponding card reader 21, communication unit 24 and input/output device 25 of Fig. 1.

The control unit 26 performs all the functionalities of the control unit 22 except the difference that it does not calculate and check the local credit line of a transaction. According to the embodiments of Fig. 2, the host system 6 performs these functionalities of the transaction system.

The host system 6 performs the server-side part of the transaction procedure. The host system 6 is constituted by a hardware platform formed by one or several servers, a software platform and several application programs executed on this system platform. The functionalities of the host system 6, which are described in the following, are provided by the execution of the software components of the host system 6 by the hardware components of the host system 6:

From functional point of view, the host system 6 comprises a data base 63, a control unit 62, a communication unit 61 and a localization unit 64.

The data base 63 comprises one or several location dependent credit line profiles. Each of the location dependent credit line profile is assigned to one or several credit cards. By way of example, Fig. 2 shows the credit line profile 12 assigned to the credit card 51. The credit line profile 12 is arranged as the credit card profile 12 according to Fig. 1.

The localization unit 64 determines localization data of transactions executed by means of credit cards. To perform this function, it accesses a localization server of a mobile network, for example the localization server 41. The localization server 41 determines the location of a mobile phone associated with the credit card.

But, it is also possible, that the localization unit 64 evaluates data received from the tranactor terminal 71 for determining such localization data. For example, it receives data from a GPS-receiver associated with the transactor terminal 71 or with the credit card 51.

Further, it is possible to implement the host system 6 without the localization unit 64. The control unit 62 evaluates localization data received from the transactor terminal 71. For example, the control unit 62 receives through the communication units 22 and 61 geographical coordinates determined by a GPS-receiver of the transactor terminal or stored as localization data in a memory unit of the transactor terminal 71. Further, it may evaluate an identifier of the transactor terminal as identifier of a local transactor describing the location of the local transactor.

The communication unit 61 is arranged as the communication unit 22 of Fig. 1 and provides the corresponding server-side communication functionalities. As the communication unit 24, it may comprise a security module for providing a secure communication between the host system 6 and the transactor terminal 71.

The credit card user connects the credit card 51 to the transactor terminal 71. Further, it inputs his pin number and specifies payment data, for example the value of the transaction. These data are transferred by the control unit 26 through the communication units 24 and 61 to the control unit 62. It is possible to prevent the transfer of the pin number by help of the mechanisms described by hand of the control unit 22 of Fig. 1.

The control unit 62 determines location data of the transaction presently executed by means of the credit card 51. For example, it determines the identifier of the local transactor.

Then, the control unit 62 determines by means of the received card identification data 11 the credit line profile assigned to the credit card 51. According to this embodiment, the control unit 62 selects the credit line profile 12 and accesses this credit line profile by means of the determined localization data. It correlates the determined localization data describing the location of the transaction with the locations and/or location areas defined within the credit line profile. By means of this correlation process it determines the local credit line associated to the localization data according to the credit line profile of the credit card 51. If the credit line profile comprises additional dependencies, it performs corresponding correlation steps for these additional dependencies.

Having calculated the local credit line of the transaction, the control unit 62 checks the transaction in view of this local credit line. If the value of the transaction exceeds the granted local credit line, it does not accept the transaction and sends a corresponding message back to the transactor terminal 71.

Beside checking the transaction in view of granted local credit line, the control unit 62 checks the proper authorization of the card user and the proper balance of the credit account associated to the user. If all these checkings have concluded in a positive sense, the control unit 62 sends an acknowledgement message back to the control unit 62. In the following, the control unit 62 concludes the transaction and reports this back to the control unit 62.

According to a further embodiment of the invention, the credit card user has not to enter a pin code. No pin code is transferred from the control unit 26 to the control unit 62. The control unit 62 does not check the authorization of the credit card user by means of such entered pin code.

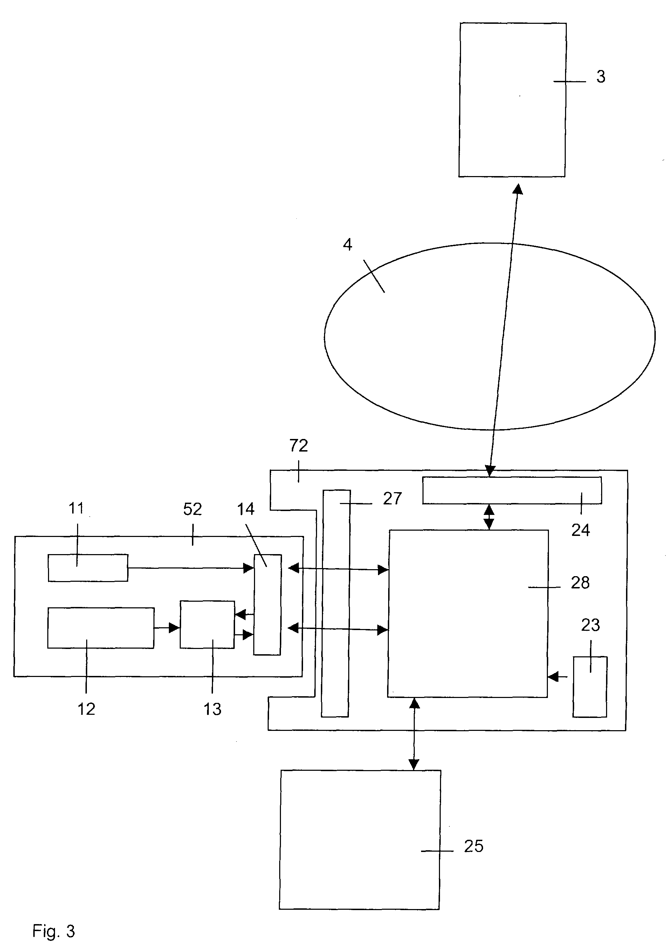

In the following, further embodiments of the invention are described by hand of Fig. 3.

Fig. 3 shows a credit card 52, a transactor terminal 72, the communication network 4 and the host system 3.

The host system 3 and the communication network 4 are operated as described for the host system 3 and communication network 4 of Fig. 1.

The credit card 52 is a chip card or smart card equipped with an embedded memory and an embedded processor. From functional point of view, it comprises a memory unit storing the card identification data 11 and the credit line profile 12, a control unit 13 and a interface unit 14. The card identification data 11 and the location dependent credit line profile 12 are arranged as the card identification data 11 and the credit line profile 12 of Fig. 1.

The interface unit 11 provides a secure communication between the credit card 52 and the transactor terminal 72. The control unit 13 calculates a local credit line by means of determined location data received from the transactor terminal 72 and by means of the credit line profile 12 stored on the credit card 52.

The transactor terminal 72 comprises the communication unit 24, the localization unit 23, an interface unit 27 and a control unit 28. The control unit 28 is connected to the input/output device 25. The communication unit 24, the localization unit 23 and the input/output device 25 are operated as described for the corresponding units of Fig. 1.

The interface unit 27 provides the terminal-side functionalities to enable a secure communication with the credit card 52. The control unit 28 controls the terminal side process of the transaction process.

The credit card user connects the credit card 52 with the transactor terminal 72. Further, it enters his pin code and specifies payment data, for example the value of the transaction. The control unit 28 establishes via the interface units 27 and 14 a secure connection between the credit card 52 and the transactor terminal 72. Location data determined by the localization unit 23 are transferred to the control unit 13. The control unit 13 calculates a granted local credit line by means of correlating the received location data with the credit line profile 12. Then, it replies granted local credit line back to the control unit 28.

Further, the card identification data 11 is transferred through the interface unit 14 and 27 to the control unit 28.

Now, the card identification data 11, the pin code and the granted local credit line are available within the control unit 28. It is now in a position to perform the rest of the steps of the transaction procedure as described by hand of Fig. 1.

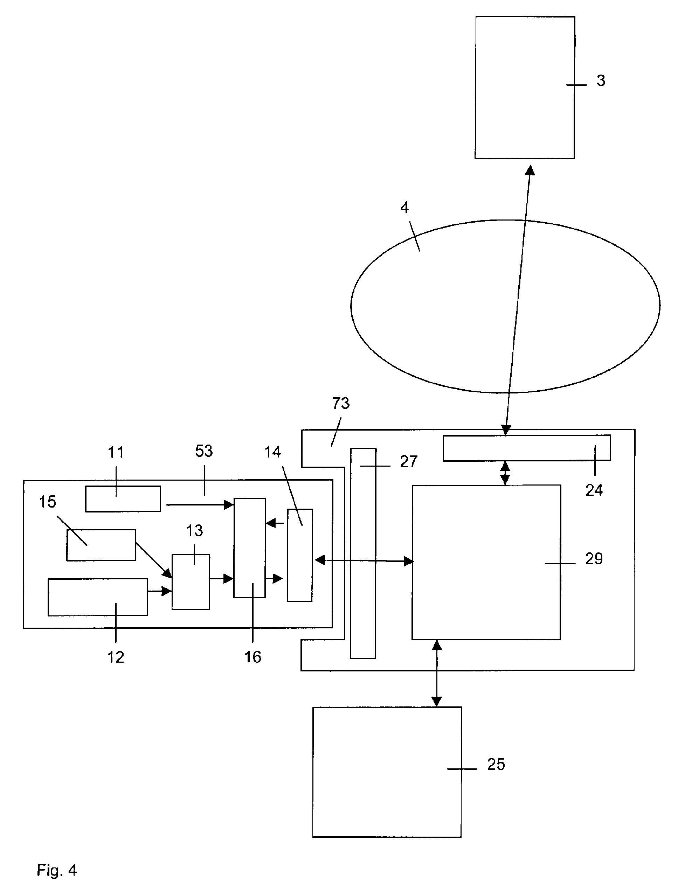

In the following, further embodiments of the invention are described by hand of Fig. 4.

Fig. 4 shows a credit card 53, a transactor terminal 73, a communication network 4 and a host system 3. The host system 3 and the communication network 4 are operated as the host system 3 and the communication network 4 of Fig. 1.

The credit card 63 comprises, beside the functionalities of the credit card 52 of Fig. 3, a localization unit 15 and a further control unit 16. The localization unit 15 is a GPS-receiver. The control unit 16 checks the transaction in view of granted local credit line calculated by the control unit 13.

The transactor terminal 73 comprises the interface unit 27, the communication unit 24 and a control unit 29 connected to the input/output device 25. The interface unit 27, the communication unit 24 and the input/output device 25 are arranged as the corresponding units of Fig. 3. The control unit 29 handles the terminal-side part of the transaction process.

The credit card user connects the credit card 63 to the transaction terminal 73. Further, it enters his pin code and payment data. The payment data are transferred by the control unit 29 to the control unit 16. The control unit 16 checks the transaction in view of granted local credit line by means of the granted local credit line it receives from the control unit 13 and by means of the payment data received from the control unit 29. The result of this check is replied to the control unit 29. In the following, the control unit 29 performs the other transaction steps described by hand of Fig. 1 and Fig. 2.

It is also possible, that further ones of these steps are executed by the control unit 16.

## Claims

1. Method for executing a transaction by means of a credit card (1, 51, 52, 53),
**characterized in**
**that** the method comprising the steps of
storing a location dependent credit line profile (12) of said credit card (1, 51, 52, 53), the location dependent credit line profile (12) defines the credit line of the credit card dependent on location of transaction; determining location data of said transaction executed by means of the credit card; and
checking the transaction in view of granted local credit line calculated by means of the determined location data and the credit line profile (12) of said credit card.

2. The method of claim 1,
**characterized in**
**that** the credit line profile (12) further defines the credit line of the credit card (1, 51, 52, 53) dependent on the time of transaction.

3. The method of claim 1 or claim 2,
**characterized in**
**that** the credit line profile (12) defines the credit line of the credit card dependent on kind of business the transaction is executed for.

4. The method of claim 1,
**characterized in**
**that** the credit line (12) assigns credit lines to location areas specified by geographical coordinates.

5. The method of claim 1,
**characterized in**
**that** the credit line profile (12) assigns credit lines to locations specified by identifiers of local transactors.

6. A credit card (1, 52, 53) for executing transactions,
**characterized in**
**that** the credit card (1, 52, 53) comprises a memory unit storing a location dependent credit line profile (12) of the credit card, the location dependent credit line profile defines the credit line of the credit card dependent on location of transaction.

7. The credit card of claim 6,
**characterized in**
**that** the credit card (52, 53) is a chip card comprising a control unit for determining local credit lines by means of the credit line profile (12) of said credit card and by means of location data of transactions.

8. A host system (6) for executing transactions by means of credit cards (1,51),
**characterized in**
**that** the host system (6) comprises a memory unit (63) storing at least one location dependent credit line profile (12) of a credit card, the location dependent credit line profile (12) defines the credit line of the credit card dependent on the location of transaction, and a control unit (62) for granting a local credit line to a transaction, wherein the control unit (62) calculates said local credit line by means of location data determined for the transaction and by means of the credit line profile (12) assigned to the involved credit card (51).

9. The host system (6) of claim 8,
**characterized in**
**that** the host system (6) comprises means (64) for determining the location of transactions.

10. Transactor terminal (22, 26, 28, 29) for executing transactions by means of credit cards (1, 51, 52, 53)
**characterized in**
**that** the transactor terminal (2, 71, 72, 73) comprises a control unit (22, 26, 28, 29) for checking a transaction executed by means of a credit card (1, 51, 52, 53) in view of granted local credit line, wherein the granted local credit line calculated by means of determined location data and by means of a location dependent credit line profile assigned to the involved credit line (1, 51, 52, 53), the location dependent credit line profile defines the credit line of the credit card dependent on location of transaction.
